(19) Europäisches Patentamt
European Patent Office
Office européen des brevets

(11) **EP 3 657 651 B1**

(12) **EUROPEAN PATENT SPECIFICATION**

(45) Date of publication and mention
of the grant of the patent:
**25.08.2021 Bulletin 2021/34**

(51) Int Cl.:
*H02M 1/00* *(2006.01)*     *G01K 7/01* *(2006.01)*
*G01K 13/20* *(2021.01)*

(21) Application number: **18207245.4**

(22) Date of filing: **20.11.2018**

(54) **A TEMPERATURE SENSING DEVICE**

TEMPERATURMESSVORRICHTUNG

DISPOSITIF DE DÉTECTION DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2020 Bulletin 2020/22**

(73) Proprietor: **Nokia Technologies Oy
02610 Espoo (FI)**

(72) Inventors:
• **Herceg, Marijan
HR-31000 Osijek (HR)**

• **Matic, Tomislav
HR-31000 Osijek (HR)**

(74) Representative: **Swindell & Pearson Limited
48 Friar Gate
Derby DE1 1GY (GB)**

(56) References cited:
WO-A1-2017/052929     US-A1- 2010 142 587
US-A1- 2012 257 650     US-A1- 2015 117 494
US-B1- 6 297 761

## Description

TECHNOLOGICAL FIELD

Examples of the present disclosure relate to a temperature sensing device. Some relate to a temperature sensing device which is suitable for use in wearable electronic devices.

BACKGROUND

Temperature is one of the most often measured physical values. It is therefore useful to provide efficient and versatile apparatus for temperature sensing.

US2015117494A1 discloses a temperature sensor including a capacitor and a reverse biased diode, a junction temperature of which is to be sensed. The capacitor is charged by a reverse saturation current flowing throughout the reverse biased diode.

US6297761 B1 discloses a reverse-biased diode for measuring the silicon temperature of a power MOS field-effect transistor and a diode for measuring the surrounding temperature. The anodes of the diodes are each connected to the negative reference-ground potential via a respective capacitor. A central processing unit uses the time for the voltage across a respective capacitor to change from an L level to an H level to determine the associated measured temperature value.

US2012257650A1 discloses a temperature sensing device comprising a diode and a circuit. The diode is adapted to be reverse biased by a charging voltage applied thereto. The circuit determines a temperature of the diode based on a rate that the voltage on the diode discharges in response to the charging voltage being uncoupled from the diode.

WO2017052929A1 discloses a first diode with an anode coupled to ground potential, a second diode with an anode coupled to ground potential, and a circuit generating signal having a duty cycle based on a voltage across the first diode and a voltage across the second diode, and a temperature calculator which calculates a value of temperature based on the duty cycle of the signal.

US2010142587A1 discloses a temperature measurement circuit which includes a diode and a temperature detection section that detects the temperature based on the current passing through the diode.

BRIEF SUMMARY

According to to claim 1, there is provided a temperature sensing apparatus comprising: at least one first diode and at least one second diode; at least one capacitor configured to be charged though the at least one first diode and discharged through the at least one second diode; at least one switch having a first configuration and a second configuration wherein when the at least one switch is in the first configuration it enables the at least one capacitor to be charged through the at least one first diode and when the at least one switch is in the second configuration it enables the at least one capacitor to be discharged through the at least one second diode; and control circuitry configured to enable the at least one switch to be switched between the first configuration and the second configuration, wherein the time taken to charge the at least one capacitor to an upper threshold provides an indication of a first temperature and the time taken to discharge the at least one capacitor to a lower threshold provides an indication of a second temperature.

The output of the temperature sensing apparatus may comprise a pulse train.

The time taken to charge the at least one capacitor to an upper threshold may provide an indication of a first temperature and the time taken to discharge the at least one capacitor to a lower threshold may provide an indication of a second temperature.

The at least one first diode may be provided in a different location to the at least one second diode so that the at least one first diode and the at least one second diode can sense different temperature regions.

The temperature measurements may be obtained from an average of one or more charging and discharging cycles of the at least one capacitor.

The temperature sensing apparatus may comprise a plurality of first diodes connected in parallel to one another.

The temperature sensing apparatus may comprise a plurality of second diodes connected in parallel to one another.

The control circuitry may comprise at least one comparator.

The control circuitry may be configured to switch the at least one switch between the first configuration and the second configuration based on a voltage level of the at least one capacitor.

The control circuitry may be configured to control the at least one switch to enable a plurality of continuous charging and discharging cycles of the at least one capacitor.

The at least one first diode and/or the at least one second diode may comprise p-n junction diodes.

According to various, but not necessarily all, examples of the disclosure there may be provided a wearable electronic device comprising a temperature sensing apparatus as claimed in any preceding claim.

According to various, but not necessarily all, examples of the disclosure there may be provided an energy harvesting device comprising a temperature sensing apparatus as claimed in any preceding claim.

BRIEF DESCRIPTION

Some example embodiments will now be described with reference to the accompanying drawings in which:

Fig. 1 shows an example temperature sensing apparatus;
Figs. 2A and 2B show example outputs of a temperature sensing apparatus;
Fig. 3 shows another example temperature sensing apparatus; and
Fig. 4 shows an example wearable electronic device.

DETAILED DESCRIPTION

Examples of the disclosure relate to a temperature sensing apparatus 101. The temperature sensing apparatus 101 enables at least two different temperatures to be measured. The temperature sensing apparatus 101 could be used in devices such as wearable electronic devices 401 or any other suitable type of devices. The temperature sensing apparatus 101 comprises, at least one first diode 103A and at least one second diode 103B and at least one capacitor 105 configured to be charged though the at least one first diode 103A and discharged through the at least one second diode 103B. The temperature sensing apparatus 101 also comprises at least one switch 107A, 107B having a first configuration and a second configuration. When the at least one switch 107A, 107B is in the first configuration it enables the at least one capacitor 105 to be charged through the at least one first diode 103A and when the at least one switch 107A, 107B is in the second configuration it enables the at least one capacitor 105 to be discharged through the at least one second diode 103B. The temperature sensing apparatus 101 also comprises control circuitry 109 configured to enable the at least one switch 107A, 107B to be switched between the first configuration and the second configuration. This switching enables the time period for charging the capacitor 105 through the at least one first diode 103A and also the time period for discharging the capacitor 105 through the at least one second diode 103B to be measured. This enables two different temperatures to be measured by the same temperature sensing apparatus 101.

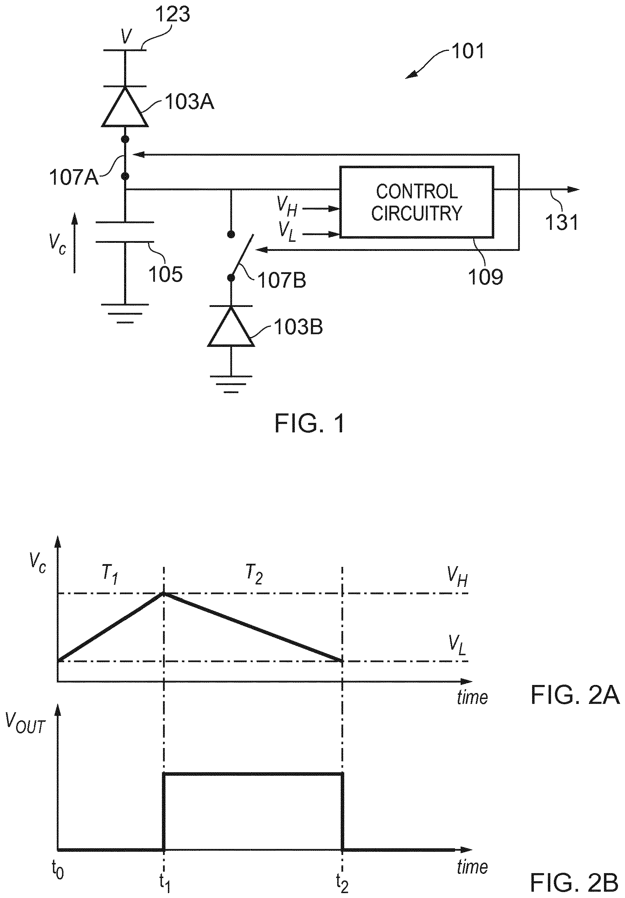

Fig. 1 shows an example temperature sensing apparatus 101. The temperature sensing apparatus 101 shown in Fig. 1 comprises a first diode 103A, a second diode 103B, a capacitor 105, a plurality of switches 107A and 107B and control circuitry 109. It is to be appreciated that in other examples the temperature sensing apparatus 101 could comprise other components that are not shown in Fig. 1. For instance the temperature sensing apparatus 101 could comprise a power source or means for coupling the temperature sensing apparatus 101 to a power source.

The diodes 103A, 103B may comprise any diodes that are sensitive to temperature. The diodes 103A, 103B may be sensitive to temperature in that the saturation current of the diodes 103A, 103B may be determined by the ambient temperature of the diode 103A, 103B. In examples of the disclosure the diodes 103A, 103B could be reverse polarized diodes. The saturation current of the diodes 103A, 103B could increase as the temperature of the diodes 103A, 103B increases.

In some examples the diodes 103A, 103B may be p-n junction diodes. Other types of diode could be used in other examples of the disclosure.

In some examples the first diode 103A and the second diode 103B may be identical. In other examples the first diode 103A and the second diode 103B could be different, for instance they could be configured to have different saturation currents and/or could be different types of diodes.

The temperature sensing apparatus 101 may be configured so that the first diode 103A is in a different location to the second diode 103B. This may enable the first diode 103A to have a different ambient temperature to the second diode 103B. This may enable the two different diodes 103A, 103B to measure two different temperatures. For instance, where the temperature sensing apparatus 101 is provided within a wearable electronic device 401 the first diode 103A could be positioned in a location that can be adjacent to the skin of a subject and the second diode 103B could be positioned in a location that is not adjacent to the skin of the subject but is exposed to the environment around the subject. This could enable the first diode 103A to measure the temperature of the subject and the second diode 103B to measure the temperature of the environment around the subject. Other positions and arrangements of the first and second diodes 103A, 103B could be used in other examples of the disclosure.

In the example shown in Fig. 1 the temperature sensing apparatus 101 comprises one first diode 103A and one second diode 103B. It is to be appreciated that in other examples the temperature sensing apparatus 101 could comprise more than one first diode 103A and/or more than one second diode 103B. Where the temperature sensing apparatus 101 comprises a plurality of first diodes 103A the plurality of first diodes 103A could be connected in parallel to one another. Similarly where the temperature sensing apparatus 101 comprises a plurality of second diodes 103B the plurality of second diodes 103B could be connected in parallel to one another. Configuring the diodes in parallel may increase the current compared to having a single diode 103A, 103B and this may decrease the time taken for charging and/or discharging the capacitor 105.

The capacitor 105 is coupled to the first diode 103A so that the capacitor 105 can be charged through the first diode 103A. The capacitor 105 is configured to be charged so that the voltage across the capacitor 105 is $V_c$.

The capacitor 105 is also configured to be coupled to the second diode 103B so that the capacitor 105 can be discharged through the second diode 103B.

The temperature sensing apparatus 101 also comprises a plurality of switches 107A, and 107B. In the examples shown in Fig. 1 the temperature sensing apparatus 101 comprises two switches 107A and 107B.

The plurality of switches 107A and 107B have at least a first configuration and a second configuration. The plurality of switches 107A and 107B are shown in the first configuration in Fig. 1. In the first configuration the plurality of switches 107A and 107B enable the capacitor 105 to be charged through the first diode 103A. In the second configuration the plurality of switches 107A and 107B enable the capacitor 105 to be discharged through the second diode 103B.

In the example temperature sensing apparatus 101 shown in Fig. 1 a first switch 107A is provided between the first diode 103A and the capacitor 105. In the first configuration this first switch 107A is closed so as to provide a path for direct current between the first diode 103A and the capacitor 105. This enables a power source 123 to be used to charge the capacitor 105 through the first diode 103A.

In the example temperature sensing apparatus 101 shown in Fig. 1 the second switch 107B is provided between the capacitor 105 and the second diode 103B. In the first configuration the second switch 107B is opened so that there is no direct current path between the capacitor 105 and the second diode 103B.

When the temperature sensing apparatus 101 is arranged into the second configuration the first switch 107A is opened and the second switch 107B is closed. When the first switch 107A is opened this breaks the direct current path between the first diode 103A and the capacitor 105 and prevents the capacitor 105 from being charged through the first diode 103A. When the second switch 107B is closed this provides a path for direct current between the capacitor 105 and the second diode 103B and so enables the capacitor 105 to be discharged through the second diode 103B.

The plurality of switches 107A and 107B are coupled to control circuitry 109. The plurality of switches 107A and 107B are coupled to the control circuitry 109 so that the control circuitry 109 can provide control signals to the plurality of switches 107A and 107B to enable the plurality of switches 107A and 107B to be switched between the first configuration and the second configuration. The control circuitry 109 may be configured to control the switching between the first configuration and the second configuration based on a voltage level of the capacitor 105. In some examples the control circuitry 109 may be configured to switch the plurality of switches 107A and 107B from the first configuration to the second configuration when the voltage level of the capacitor 105 reaches a first threshold level $V_H$. This first threshold voltage level could be a maximum voltage level, or substantially the maximum voltage level for the capacitor 105. The control circuitry 109 could also be configured to switch the plurality of switches 107A and 107B from the second configuration back to the first configuration when the voltage level of the capacitor 105 reaches a second threshold level $V_L$. This second threshold voltage level could be a minimum voltage level, or substantially the minimum voltage level for the capacitor 105. The first threshold level is an upper threshold level and the second threshold level is a lower threshold level.

The control circuitry 109 may comprise any means which may be configured to provide a control signal to the plurality of switches 107A and 107B in response to a threshold voltage being reached on the capacitor 105. In some examples the control circuitry 109 may comprise a comparator such as a hysteresis comparator or any other suitable means.

The control circuitry 109 may be configured to provide an output signal 131. The output signal 131 has a voltage level $V_{out}$. The output signal 131 provides an indication of the time taken to charge the capacitor 105 through the first diode 103A and also the time taken to discharge the capacitor 105 through the second diode 103B. An example of an output signal 131 from the control circuitry 109 is shown in Fig. 2B.

The control circuitry 109 may be configured so that the output signal 131 from the control circuitry 109 can be provided to processing circuitry to enable the ambient temperature of the diodes 103A and 103B to be estimated from the information in the output signal 131. In some examples the processing circuitry may be provided within the temperature sensing apparatus 101 so that the output signal 131 can be provided directly from the control circuitry 109 to the processing circuitry. In other examples the processing circuitry could be provided in a separate apparatus. In such cases the output signal 131 may be provided to transceiver circuitry to enable the output signal 131 to be transmitted to the processing circuitry.

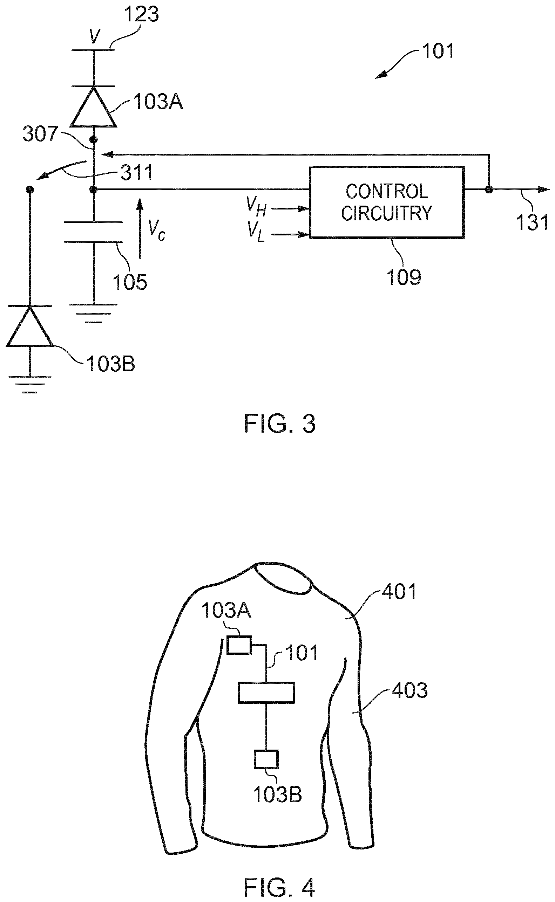

It is to be appreciated that the temperature sensing apparatus 101 shown in Fig. 1 is an example and that variations may be made to this example. For instance, in the example of Fig. 1 the temperature sensing apparatus 101 comprises two switches 107A, 107B in other examples the temperature sensing apparatus 101 could comprise a different number of switches. For instance a single switch could be provided which could alternately connect the capacitor 105 to the first diode 103A and the second diode 103B as shown in Fig. 3.

Figs. 2A and 2B show example outputs of the temperature sensing apparatus 101. Fig 2A shows the voltage level $V_C$ across the capacitor 105 as a function of time.

At time $t_0$ the voltage level $V_C$ across the capacitor 105 is at the lower threshold level $V_L$. At time $t_0$ the plurality of switches 107A and 107B are arranged into the first configuration so that charging of the capacitor 105 through the first diode 103A can begin.

From time $t_0$ to time $t_1$ the capacitor 105 is charged through the first diode 103A. The voltage level across the capacitor 105 increases from $V_L$ to $V_H$. At time $t_1$ the control circuitry 109 determines that the first threshold voltage level $V_H$ has been reached and sends a control signal to the plurality of switches 107A and 107B to cause them to be arranged into the second configuration so that discharging of the capacitor 105 through the second diode 103B can begin.

From time $t_1$ to time $t_2$ the capacitor 105 is discharged through the second diode 103B. The voltage level across the capacitor 105 decreases from $V_H$ back to $V_L$. At time $t_2$ the control circuitry 109 determines that the second threshold voltage level $V_L$ has been reached and sends a control signal to the plurality of switches 107A and 107B to cause them to be arranged back into the first configuration so that charging of the capacitor 105 through the first diode 103A can begin again. It is to be appreciated that this cycle can be repeated any number of times. The cycle of charging and discharging may be repeated continuously so that there is no time gap between consecutive cycles.

The time taken to charge the capacitor 105 is given by $t_1-t_0=T_1$ and the time taken to discharge the capacitor 105 is given by $t_2-t_1=T_2$. As the time taken to charge and discharge the capacitor 105 is dependent upon the saturation current of the diodes 103A, 103B and the saturation current is determined by the ambient temperature of the diodes 103A, 103B the values of $T_1$ and $T_2$ give an indication of the ambient temperature of the different diodes 103A, 103B. Therefore the time taken to charge the capacitor 105 to an upper threshold provides an indication of a first temperature and the time taken to discharge the capacitor 105 to a lower threshold provides an indication of a second temperature.

The relation between time measurement $T_1$ and saturation current $I_D$ is given by

$$V_H - V_L = \frac{I_{D1}}{C} T_1 \rightarrow I_{D1} = \frac{C}{T_1}(V_H - V_L); \text{ for } t \in [t_0, t_1],$$

$$V_H - V_L = \frac{I_{D2}}{C} T_2 \rightarrow I_{D2} = \frac{C}{T_2}(V_H - V_L); \text{ for } t \in [t_1, t_2], \tag{1}$$

Where $V_H$ is the upper voltage level on the capacitor, $V_L$ is the lower voltage level on the capacitor and C is the capacitance of the capacitor.

The relation between saturation current and measured temperature is given as

$$I_{Dk} = Const * \exp\left(\frac{-E_g}{x*k*Temp_k}\right) \rightarrow Temp_k = \frac{E_g}{x*k*ln\left(\frac{Const}{I_{Dk}}\right)}, \tag{2}$$

where Const represent a constant values, $E_g$ is energy gap between the valence and conduction bands, k is the Boltzmann constant, and x is the parameter which value is between 1 and 2 and depends on diode production process.

Therefore, by substituting (1) in (2) the temperature from measurement time can be obtained as

$$Temp_1 = \frac{E_g}{x*k*ln\left(\frac{Const*T_1}{C(V_H-V_L)}\right)}, \quad Temp_2 = \frac{E_g}{x*k*ln\left(\frac{Const*T_2}{C(V_H-V_L)}\right)}. \tag{3}$$

Fig. 2B shows an example output signal 131 from the control circuitry 109. The output signal 131 comprises a pulse train where the pulses provide an indication of the duration of the charging and discharging of the capacitor 105.

At time $t_0$ the voltage level $V_{out}$ of the output signal 131 is at a first level. The first level may be zero or a minimum level. At time $t_1$ the control circuitry determines that the first threshold voltage level $V_H$ has been reached for the capacitor 105 and the voltage level $V_{out}$ of the output signal 131 switches from the first level to a second different level. The second level may be higher than the first level. At time $t_2$ the control circuitry 109 determines that the second threshold voltage level $V_L$ has been reached for the capacitor 105 and the voltage level $V_{out}$ of the output signal 131 switches from the second level back to the first level. It is to be appreciated that this cycle can be repeated any number of times.

The output signal 131 therefore provides an indication of the time taken to charge the capacitor 105 though the first diode 103A and also the time taken to discharge the capacitor 105 through the second diode 103B.

The temperature sensing apparatus 101 therefore enables the duration of both the charging of the capacitor 105 through the first diode 103A and the discharging of the capacitor 105 through the second diode 103B to be measured. This enables two different temperature measurements to be obtained using the same temperature sensing apparatus 101.

In examples of the disclosure the control circuitry 109 can be configured to control the plurality of switches 107A and 107B so that the same measurements can be repeated multiple times the measurements can be averaged over these plurality of cycles and this further reduces the noise in the measurements to provide a more accurate measurement.

Fig. 3 shows another example temperature sensing apparatus 101. The temperature sensing apparatus 101 comprises a first diode 103A, a second diode 103B, a capacitor 105 and control circuitry 109 which may be as shown in Fig. 1. The temperature sensing apparatus 101 differs from that shown in Fig. 1 in that the temperature sensing apparatus 101 only comprises a single switch 307.

The switch 307 has a first configuration and a second configuration. The switch 307 is shown in the first configuration in Fig. 3. In the first configuration the switch 307 enables the capacitor 105 to be charged through the first diode 103A. In the second configuration the switch enables the capacitor 105 to be discharged through the second diode 103B.

In the example temperature sensing apparatus 101 shown in Fig. 3 The switch 307 is provided between the first diode 103A and the capacitor 105. In the first configuration the switch 307 is closed so as to provide a path for direct current between the first diode 103A and the capacitor 105. This enables a power source 123 to be used to charge the capacitor 105 through the first diode 103A.

The arrow 311 shows how the switch 307 is re-configured to as to arranged the switch 307 into the second configuration. In the second configuration the switch 207 is opened so as to break the direct current path between the first diode 103A and the capacitor 105. This prevents the capacitor 105 from being charged through the first diode 103A. In the second configuration the switch 207 provides a direct current path between the capacitor 105 and the second diode 103B. This enables the capacitor 105 to be discharged through the second diode 103B.

The switch 307 is coupled to the control circuitry 109 so that the control circuitry can provide control signals to the switch 307. These control signals enable the switch 307 to be switched between the first and second configuration based on the voltage level of the capacitor 105.

It is to be appreciated that other variations of the plurality of switches could be used in other examples of the disclosure.

Fig. 4 shows an example wearable electronic device comprising one or more temperature sensing apparatus 101. The wearable electronic device 401 comprises any means which may be attached to the body of a subject so as to enable the one or more temperature sensing apparatus 101 to measure the temperature of the subject.

In the example of Fig. 4 the wearable electronic device 401 comprises a garment 403. The garment 403 comprises an item of clothing which is arranged to be worn by a subject. In the example of Fig. 4 the garment 403 comprises a shirt which could be worn by a person. The temperature sensing apparatus 101 may be positioned within the garment 403 so that when a subject is wearing the garment the one or more diodes 101 of the temperature sensing apparatus 101 are positioned adjacent to, or in close proximity to, the body of the subject. This positioning may enable the temperature of the subject to be monitored.

In the example of Fig. 4 the first diode 103A and the second diode 103B are provided in different locations to enable the temperature to be measured in the different locations. The different locations enable the first diode 103A and the second diode 103B to sense different temperature regions. The different locations may enable the first diode 103A and the second diode 103B to sense different temperature regions independently of each other. For instance the first diode 103A is provided in a location close to the subject's armpit while the second diode 103B is provided in a location close to the subject's torso. The first diode 103A may be provided on an inner side of the garment 403 so that when the garment 403 is worn by the subject the first diode 103A is in close proximity to the subject's skin. The second diode 103B may be provided on an outer side of the garment 403 so that when the garment 403 is worn by the subject the material of the garment 403 is between the second diode 103B and the subjects' skin. This prevents the second diode 103B from being in close proximity with a subject's skin. This enables the first diode 103A to be used to measure the temperature of the subject while the second diode 103B can be used to measure the temperature of the environment around the subject.

In the example shown in Fig. 4 the wearable electronic device 401 comprises a garment 403. It is to be appreciated that other types of wearable electronic devices 401 could be used in other examples of the disclosure. For instance the wearable electronic device 401 could comprise a strap which could be attached to any suitable part of a subject's body, or any other suitable article of clothing. In some examples the wearable electronic device 401 could comprise an adhesive portion which could be adhered to the skin of a subject.

The wearable electronic device 401 may be configured to be worn for an extended period of time. For instance, the garment 403 or other type of device may be light weight and comfortable enough so that a subject can wear the wearable electronic device 401 for the extended period of time. The extended period of time could be several hours or even longer. The plurality of temperature sensing apparatus 101 may be configured to enable the temperature of the subject to be monitored for that extended period of time. This may be useful for the purposes of health monitoring. This may enable changes in the temperature of the subject to be monitored.

In examples where the temperature sensing apparatus 101 is being used to measure the body temperature of a subject the temperature could be measured over a plurality of cycles of charging and discharging of the capacitor 105 so as to increase the accuracy of the measurement. In such examples the temperature that is being measured is relatively stable and large or sudden fluctuations in the temperature would not be expected. In such examples the charge-discharge cycle time could be relatively long. For example, it could be of the order of seconds or tenths of seconds. In other examples the temperature sensing apparatus 101 could be used to measure temperature in an environment where the temperature is varying more rapidly.

It is to be appreciated that the temperature sensing apparatus 101 could be used in other types of devices in other examples of the disclosure. For instance, in some examples the temperature sensing apparatus 101 could be provided within an energy harvesting device. The energy harvesting device could be a thermoelectric generator which is configured to use a temperature difference to enable the generation of electrical energy. Other uses for the temperature sensing apparatus 101 could include monitoring the conditions during a manufacturing process and any other suitable process.

In this description the term coupled means operationally coupled and any number or combination of intervening elements can exist between coupled elements, including no intervening elements.

The above described examples find application as enabling components of:

automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting'.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. A temperature sensing apparatus (101) comprising:

   at least one first diode (103A) and at least one second diode (103B);
   at least one capacitor (105) configured to be charged though the at least one first diode and discharged through the at least one second diode;
   at least one switch (107A, 107B) having a first configuration and a second configuration wherein when the at least one switch is in the first configuration it enables the at least one capacitor to be charged through the at least one first diode and when the at least one switch is in the second configuration it enables the at least one capacitor to be discharged through the at least one second diode; and
   control circuitry (109) configured to enable the at least one switch to be switched between the first configuration and the second configuration;
   wherein the time taken ($T_1$) to charge the at least one capacitor to an upper threshold ($V_H$) provides an indication of a first temperature and the time taken ($T_2$) to discharge the at least one capacitor to a lower threshold ($V_L$) provides an indication of a second temperature.

2. A temperature sensing apparatus as claimed in claim 1 wherein the output of the temperature sensing apparatus comprises a pulse train.

3. A temperature sensing apparatus as claimed in any preceding claim wherein the at least one first diode is provided in a different location to the at least one second diode so that the at least one first diode and the at least one second diode can sense different temperature regions.

4. A temperature sensing apparatus as claimed in any preceding claim wherein a first temperature measurement is obtained from the time taken to charge the at least one capacitor to an upper threshold level through the at least one first diode and a second temperature measurement is obtained from the time taken to discharge the at least one capacitor to a lower threshold level through the at least one second diode.

5. A temperature sensing apparatus as claimed in claim 4 wherein the temperature measurements are obtained from an average of one or more charging and discharging cycles of the at least one capacitor.

6. A temperature sensing apparatus as claimed in any preceding claim comprising a plurality of first diodes connected in parallel to one another.

7. A temperature sensing apparatus as claimed in any preceding claim comprising a plurality of second diodes connected in parallel to one another.

8. A temperature sensing apparatus as claimed in any preceding claim wherein the control circuitry comprises at least one comparator.

9. A temperature sensing apparatus as claimed in any preceding claim wherein the control circuitry is configured to switch the at least one switch between the first configuration and the second configuration based on a voltage level ($V_C$) of the at least one capacitor.

10. A temperature sensing apparatus as claimed in any preceding claim wherein the control circuitry is configured to control the at least one switch to enable a plurality of continuous charging and discharging cycles of the at least one capacitor.

**11.** A temperature sensing apparatus as claimed in any preceding claim wherein the at least one first diode and/or the at least one second diode comprise p-n junction diodes.

**12.** A wearable electronic device (401) comprising a temperature sensing apparatus as claimed in any preceding claim.

**13.** An energy harvesting device comprising a temperature sensing apparatus as claimed in any preceding claim.

**Patentansprüche**

**1.** Temperaturerfassungseinrichtung (101), die Folgendes umfasst:

mindestens eine erste Diode (103A) und mindestens eine zweite Diode (103B);
mindestens einen Kondensator (105), der dazu ausgelegt ist, über die mindestens eine erste Diode geladen und über die mindestens eine zweite Diode entladen zu werden;
mindestens einen Schalter (107A, 107B) mit einer ersten Auslegung und einer zweiten Auslegung, wobei der mindestens eine Schalter, wenn er sich in der ersten Auslegung befindet, das Laden des mindestens einen Kondensators über die mindestens eine erste Diode ermöglicht und, wenn sich der mindestens eine Schalter in der zweiten Auslegung befindet, das Entladen des mindestens einen Kondensators über die mindestens eine zweite Diode ermöglicht; und
eine Steuerschaltung (109), die dazu ausgelegt ist, das Schalten des mindestens einen Schalters zwischen der ersten Auslegung und der zweiten Auslegung zu ermöglichen;
wobei die erforderliche Zeit ($T_1$) zum Laden des ersten Kondensators auf einen oberen Schwellwert ($V_H$) eine Anzeige einer ersten Temperatur bereitstellt und die erforderliche Zeit ($T_2$) zum Entladen des mindestens einen Kondensators auf einen unteren Schwellwert ($V_L$) eine Anzeige einer zweiten Temperatur bereitstellt.

**2.** Temperaturerfassungseinrichtung nach Anspruch 1, wobei die Ausgabe der Temperaturerfassungseinrichtung eine Impulsfolge umfasst.

**3.** Temperaturerfassungseinrichtung nach einem der vorhergehenden Ansprüche, wobei die mindestens eine erste Diode an einer anderen Stelle als die mindestens eine zweite Diode bereitgestellt ist, derart, dass die mindestens eine erste Diode und die mindestens eine zweite Diode verschiedene Temperaturregionen erfassen können.

**4.** Temperaturerfassungseinrichtung nach einem der vorhergehenden Ansprüche, wobei eine erste Temperaturmessung aus der erforderlichen Zeit zum Laden des mindestens einen Kondensators über die mindestens eine erste Diode auf einen oberen Schwellwertpegel erhalten wird und eine zweite Temperaturmessung aus der erforderlichen Zeit zum Entladen des mindestens einen Kondensators über die mindestens eine zweite Diode auf einen unteren Schwellwertpegel erhalten wird.

**5.** Temperaturerfassungseinrichtung nach Anspruch 4, wobei die Temperaturmessungen aus einem Durchschnitt von einem oder mehreren Lade- und Entladezyklen des mindestens einen Kondensators erhalten werden.

**6.** Temperaturerfassungseinrichtung nach einem der vorhergehenden Ansprüche, die eine Vielzahl von ersten Dioden umfasst, die parallel zueinander verbunden sind.

**7.** Temperaturerfassungseinrichtung nach einem der vorhergehenden Ansprüche, die eine Vielzahl von zweiten Dioden umfasst, die parallel zueinander verbunden sind.

**8.** Temperaturerfassungseinrichtung nach einem der vorhergehenden Ansprüche, wobei die Steuerschaltung mindestens einen Komparator umfasst.

**9.** Temperaturerfassungseinrichtung nach einem der vorhergehenden Ansprüche, wobei die Steuerschaltung dazu ausgelegt ist, den mindestens einen Schalter zwischen der ersten Auslegung und der zweiten Auslegung auf Basis eines Spannungsniveaus ($V_C$) des mindestens einen Kondensators zu schalten.

**10.** Temperaturerfassungseinrichtung nach einem der vorhergehenden Ansprüche, wobei die Steuerschaltung dazu ausgelegt ist, den mindestens einen Schalter zu steuern, um eine Vielzahl von kontinuierlichen Lade- und Entladezyklen des mindestens einen Kondensators zu ermöglichen.

**11.** Temperaturerfassungseinrichtung nach einem der vorhergehenden Ansprüche, wobei die mindestens eine erste Diode und/oder die mindestens eine zweite Diode p-n-Sperrschichtdioden umfassen.

**12.** Tragbare elektronische Vorrichtung (401), die eine Temperaturerfassungseinrichtung nach einem der vorhergehenden Ansprüche umfasst.

**13.** Energieerntevorrichtung, die eine Temperaturerfassungseinrichtung nach einem der vorhergehenden Ansprüche umfasst.

**Revendications**

**1.** Appareil de détection de température (101) comprenant :

au moins une première diode (103A) et au moins une seconde diode (103B) ;
au moins un condensateur (105) configuré pour être chargé par le biais de l'au moins une première diode et déchargé par le biais de l'au moins une seconde diode ;
au moins un commutateur (107A, 107B) ayant une première configuration et une seconde configuration dans lequel, lorsque l'au moins un commutateur est dans la première configuration, il permet à l'au moins un condensateur d'être chargé par le biais de l'au moins une première diode et lorsque l'au moins un commutateur est dans la seconde configuration, il permet à l'au moins un condensateur d'être déchargé par le biais de l'au moins une seconde diode ; et
un circuit de commande (109) configuré pour permettre à l'au moins un commutateur d'être commuté entre la première configuration et la seconde configuration ;
dans lequel le temps nécessaire ($T_1$) pour charger l'au moins un condensateur jusqu'à un seuil supérieur ($V_H$) fournit une indication d'une première température et le temps nécessaire ($T_2$) pour décharger l'au moins un condensateur jusqu'à un seuil inférieur ($V_L$) fournit une indication d'une seconde température.

**2.** Appareil de détection de température selon la revendication 1 dans lequel la sortie de l'appareil de détection de température comprend un train d'impulsions.

**3.** Appareil de détection de température selon une quelconque revendication précédente dans lequel l'au moins une première diode est ménagée à un emplacement différent de l'au moins une seconde diode de sorte que l'au moins une première diode et l'au moins une seconde diode puissent détecter différentes régions de température.

**4.** Appareil de détection de température selon une quelconque revendication précédente dans lequel une première mesure de température est obtenue à partir du temps nécessaire pour charger l'au moins un condensateur jusqu'à un niveau de seuil supérieur par le biais de l'au moins une première diode et une seconde mesure de température est obtenue à partir du temps nécessaire pour décharger l'au moins un condensateur jusqu'à un niveau de seuil inférieur par le biais de l'au moins une seconde diode.

**5.** Appareil de détection de température selon la revendication 4 dans lequel les mesures de température sont obtenues à partir d'une moyenne d'un ou de plusieurs cycles de charge et de décharge de l'au moins un condensateur.

**6.** Appareil de détection de température selon une quelconque revendication précédente comprenant une pluralité de premières diodes connectées en parallèle les unes aux autres.

**7.** Appareil de détection de température selon une quelconque revendication précédente comprenant une pluralité de secondes diodes connectées en parallèle les unes aux autres.

**8.** Appareil de détection de température selon une quelconque revendication précédente dans lequel le circuit de commande comprend au moins un comparateur.

**9.** Appareil de détection de température selon une quelconque revendication précédente dans lequel le circuit de commande est configuré pour commuter l'au moins un commutateur entre la première configuration et la seconde configuration sur la base d'un niveau de tension ($V_C$) de l'au moins un condensateur.

**10.** Appareil de détection de température selon une quelconque revendication précédente dans lequel le circuit de commande est configuré pour commander l'au moins un commutateur pour permettre une pluralité de cycles de charge et de décharge en continu de l'au moins un condensateur.

11. Appareil de détection de température selon une quelconque revendication précédente dans lequel l'au moins une première diode et/ou l'au moins une seconde diode comprennent des diodes à jonction p-n.

12. Dispositif électronique pouvant être porté (401) comprenant un appareil de détection de température selon une quelconque revendication précédente.

13. Dispositif de récupération d'énergie comprenant un appareil de détection de température selon une quelconque revendication précédente.

FIG. 1

FIG. 2A

FIG. 2B

FIG. 3

FIG. 4

**EP 3 657 651 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015117494 A1
- US 6297761 B1
- US 2012257650 A1
- WO 2017052929 A1
- US 2010142587 A1